# EUROPÄISCHE PATENTSCHRIFT

(11) **EP 2 795 150 B1**
(45) Veröffentlichungstag und Bekanntmachung des Hinweises auf die Patenterteilung: **30.05.2018**
(21) Anmeldenummer: 12823131.3
(22) Anmeldetag: 06.12.2012
(51) Int. Cl.: F16D 21/06, F16D 25/0638, F16D 25/10

(54) **DOPPELKUPPLUNG**
DUAL CLUTCH
EMBRAYAGE DOUBLE

(30) Priorität: 22.12.2011 DE 102011089680
(43) Veröffentlichungstag der Anmeldung: 29.10.2014
(73) Patentinhaber: Schaeffler Technologies AG & Co. KG, 91074 Herzogenaurach (DE)
(72) Erfinder: ARNOLD, Johannes, 77855 Achern (DE); HOFSTETTER, Dirk, 76448 Durmersheim (DE)
(86) Internationale Anmeldenummer: PCT/DE2012/001164
(87) Internationale Veröffentlichungsnummer: WO 2013/091600

(56) Entgegenhaltungen:
- DE-A1- 3 309 104
- DE-A1-102004 012 948
- DE-A1-102010 015 431
- US-A- 5 913 397

## Beschreibung

Die vorliegende Erfindung betrifft eine Doppelkupplung, insbesondere eine nasslaufende Doppelkupplung.

Insbesondere betrifft die vorliegende Erfindung eine Doppelkupplung mit axial hintereinander angeordneten Teilkupplungen für ein Doppelkupplungsgetriebe in einem Antriebstrang eines Fahrzeuges, mit einer in Axialrichtung antriebseitig angeordneten, durch eine erste Kolben-Zylinder-Einheit betätigbaren ersten Teilkupplung, einer in Axialrichtung getriebeseitig angeordneten, durch eine zweite Kolben-Zylinder-Einheit betätigbaren zweiten Teilkupplung und einem mit einem Antrieb verbindbaren Kupplungsgehäuse, wobei das Kupplungsgehäuse einen Eingangslamellenträger mit einer Zahnstruktur bildet oder mit einem eine Zahnstruktur aufweisenden Eingangslamellenträger verbunden ist, und wobei das Kupplungsgehäuse über einen bezüglich dem Lamellenpaket der ersten Teilkupplung innenliegend angeordneten Ausgangslamellenträger der ersten Teilkupplung mit einer ersten Getriebeeingangswelle und über einen bezüglich dem Lamellenpaket der zweiten Teilkupplung innenliegend angeordneten Ausgangslamellenträger der zweiten Teilkupplung mit einer zweiten Getriebeeingangswelle verbindbar ist.

Aus der DE 38 19 702 A1 ist eine hydraulisch betätigte (betätigbare) Doppelnasskupplung mit axial hintereinander angeordneten Teilkupplungen bekannt, wobei die hydraulischen Betätigungseinrichtungen axial vor bzw. axial nach den beiden Teilkupplungen und auf einem gleichen Durchmesser bzw. in einem gleichen Durchmesserbereich wie die Teilkupplungen angeordnet sind. Sowohl der antriebsseitige "Deckel" als auch der getriebeseitige "Deckel" des Kupplungsgehäuses weisen hierbei die Hydraulikölführungen zu den Kolben-Zylinder-Einheiten auf, sind also "gebaut". Hierdurch ergibt sich ein axial langerstreckter und komplexer Aufbau, bei dem beide hydraulischen Betätigungseinheiten hin zu einem zentralen Steg drücken.

Alternativ zu diesem Aufbau ist aus den DE 9 114 528 und DE 38 38 865 bekannt, die hydraulischen Betätigungseinrichtungen radial innen und axial überlappend mit den Teilkupplungen (also "unterhalb" im Sinne der dort gezeigten Figuren bzw. radial innerhalb der Reiblamellenpakete) anzuordnen. Hierdurch ergibt sich ein axial kürzerer Bauraum. Allerdings wirken immer noch beide hydraulischen Betätigungseinheiten hin zu einem zentralen Steg. Außerdem liegen durch die radiale Schachtelung von Betätigung und Lamellenpaketen die Lamellenpakete auf einem großen Durchmesser, mit nachteiligen Folgen für Bauraum, Gewicht und Massenträgheitsmomente. Außerdem erhöht sich hier der konstruktive Aufwand der Ölführung durch drehende Teile, sowie die Komplexität der zugehörigen Baukomponenten. Eine noch kompaktere Bauweise könnte dadurch erreicht werden, dass zwischen den beiden Teilkupplungen und den beiden Kolben-Zylinder-Einheiten ein gemeinsamer und mit dem Kupplungsgehäuse fest verbundener Kupplungssteg vorgesehen wird, und dass die hydraulischen Betätigungseinheiten "von innen nach außen" wirken, d.h. dass die Betätigungskraft der motorseitigen Teilkupplung in Richtung Motor und die Betätigungskraft der getriebeseitigen Teilkupplung in Richtung Getriebe weisen, wie aus der US 3,424,033 bekannt.

Bei axial geschachtelten, nasslaufenden Doppelkupplung, deren Teilkupplungen jeweils in Richtung Verbrennungsmotor betätigt werden, kann sich eine Anordnung von Betätigungseinheiten und Lamellenpaketen ergeben (wobei zur Vereinfachung der Schreibweise das motorseitige Lamellenpaket nachfolgend als "K1" und das getriebeseitige Lamellenpaket als "K2" bezeichnet werden), bei der die radial unterhalb der Lamellenpakete angeordneten Betätigungskolben gegenläufig zu K1 und K2 angeordnet sind, d.h. die K1 Betätigungseinrichtung liegt getriebeseitig, die K2 Betätigungseinrichtung liegt motorseitig. Außerdem fehlen den vorstehend beschriebenen Aufbauten Fliehölkammern zum Ausgleich der Wirkung der Fliehkraft auf das hydraulische Medium bei Verschiebung der Massen im hydraulischen System. Diese sind zwar beispielsweise aus der EP 0 282 169 B1 oder der DE 10 2004 012 948 A1 bekannt. Gerade diese Aufbauten haben aber den Nachteil, dass der Anteil an Kühlöl, welcher zu den beiden Teilkupplungen fließen soll, im Betrieb nicht beeinflussbar (d.h. regelbar oder steuerbar) ist. Aus der DE 10 2010 015 431 A1 ist eine Doppelkupplung mit axial hintereinander angeordneten Teilkupplungen für ein Doppelkupplungsgetriebe in einem Antriebstrang eines Fahrzeuges, mit einer in Axialrichtung antriebseitig angeordneten, durch eine erste Kolben-Zylinder-Einheit betätigbaren ersten Teilkupplung und einer in Axialrichtung getriebeseitig angeordneten, durch eine zweite Kolben-Zylinder-Einheit betätigbaren zweiten Teilkupplung und einem mit einem Antrieb verbindbaren Kupplungsgehäuse bekannt, wobei das Kupplungsgehäuse über einen bezüglich eines Lamellenpakets der ersten Teilkupplung innenliegend angeordneten Ausgangslamellenträger der ersten Teilkupplung mit einer ersten Getriebeeingangswelle und über einen bezüglich eines Lamellenpakets der zweiten Teilkupplung innenliegend angeordneten Ausgangslamellenträger der zweiten Teilkupplung mit einer zweiten Getriebeeingangswelle verbunden ist.

Es ist Aufgabe der vorliegenden Erfindung, eine Doppelkupplung anzugeben, die besonders kostengünstig und bauraumsparend herstellbar ist. Insbesondere soll auch die Kupplungshysterese verringert werden.

Erfindungsgemäß wird diese Aufgabe durch eine Doppelkupplung mit den Merkmalen des Anspruchs 1 gelöst. Durch die Aussparung im Lamellenpaket der zweiten Teilkupplung kann der Druckfinger zur Betätigung der ersten Teilkupplung in Radialrichtung weiter innen angeordnet werden, wodurch sich zum Einen der in Radialrichtung der Doppelkupplung benötigte Bauraum verringert, und wodurch sich zum Anderen die Kupplungshysterese verringert, da ein steiferes Betätigungssystem, das weniger Verlustkolbenhub benötigt, zum Einsatz kommen kann. Vorzugsweise ist die Aussparung in Radialrichtung in der Nähe eines Außenbereichs des Lamellenpakets ausgebildet, wodurch der in Radialrichtung der Doppelkupplung benötigte Bauraum weiter verringert.

Von Vorteil ist es, wenn die Aussparung als Durchbrechung ausgebildet ist, deren Rand durch Material des Lamellenpakets vollständig umgeben ist. Hierdurch ist es möglich, den Druckfinger in Radialrichtung der Doppelkupplung besonders weit nach innen zu verlegen.

Alternativ ist es von Vorteil, wenn die Aussparung als offene Aussparung ausgebildet ist, deren Rand in einen Außenumfang des Lamellenpakets übergeht. Dies ermöglicht eine einfachere Montage des Druckfingers.

Vorzugsweise weist das Lamellenpaket Eingangslamellen und Ausgangslamellen auf, die in Axialrichtung abwechselnd angeordnet sind, und von denen die Eingangslamellen in Radialrichtung weiter außen als die Ausgangslamellen angeordnet sind. Aussparungen in den Eingangslamellen bilden einen Kanal in Axialrichtung, durch den sich der Druckfinger erstreckt. Abhängig von der Art der Aussparungen kann der Kanal in Radialrichtung der Doppelkupplung nach außen geschlossen oder offen sein.

Gemäß einem bevorzugten Ausführungsbeispiel ist der Kanal ausschließlich durch die Eingangslamellen ausgebildet. Die in Radialrichtung der Doppelkupplung weiter innen angeordneten Ausgangslamellen weisen keine Aussparungen zur Durchführung des Druckfingers auf. Insbesondere sind die Eingangslamellen aus Stahl ausgebildet, so dass die Aussparungen insbesondere stanztechnisch einfach und kostengünstig in diese einzubringen sind. Die Ausgangslamellen sind vorzugsweise aus einem Verbundmaterial ausgebildet, das üblicherweise nicht werkzeugfallend bearbeitbar ist, so dass durch das bevorzugte Ausführungsbeispiel keine Änderungen in der Form und im Aufbau der nur schwer bearbeitbaren Ausgangslamellen erforderlich sind.

Vorzugsweise weisen die Eingangslamellen in ihrem Außenumfang eine vorzugsweise gleichmäßige Zahnstruktur auf, die in eine entsprechende Zahnstruktur eines Eingangslamellenträgers, der mit dem Kupplungsgehäuse verbunden oder einteilig mit dem Kupplungsgehäuse ausgebildet ist, eingreift. Dies ermöglicht eine besonders zuverlässige Übertragung des Drehmoments von der Eingangsseite der Doppelkupplung auf die Eingangslamellen.

Hierbei ist es von Vorteil, wenn die offene Aussparung in die Zahnstruktur übergeht. Die Aussparung bildet somit eine Lücke in der umlaufenden Zahnstruktur. Gemäß der Erfindung ist der Druckfinger mit einem auf eine Endlamelle der erste Teilkupplung unmittelbar oder mittelbar wirkenden ersten Druckstück, vorzugsweise mittels einer Haken- oder Federklemmverbindung, verbunden. Insbesondere wird hierdurch eine zerstörungsfrei wieder lösbare Verbindung realisiert.

Gemäß der Erfindung weist der Druckfinger bezüglich des ersten Druckstücks in Axialrichtung einen Überstand auf. Das Lamellenpaket der ersten Teilkupplung weist eine Aussparung auf, in die der Überstand bei Verlagerung des Druckfingers in Axialrichtung einfährt. Hierdurch kann der benötigte Bauraum in Axialrichtung der Doppelkupplung verringert werden.

Insbesondere ist es von Vorteil, wenn die Aussparung im Lamellenpaket der ersten Teilkupplung identisch zur Aussparung im Lamellenpaket der zweiten Teilkupplung ausgebildet ist. Für die Lamellenpakte beider Teilkupplungen können somit Gleichteile verwendet werden, wodurch die Kosten weiter verringert werden können.

Vorzugsweise ist ein auf eine Endlamelle der zweiten Teilkupplung unmittelbar oder mittelbar wirkendes zweites Druckstück vorgesehen, das in Axialrichtung bezüglich des Kupplungsgehäuses festgelegt ist, und das eine Aussparung aufweist, durch die sich der Druckfinger erstreckt. Die Aussparung kann identisch zu den Aussparungen für den Druckfinger im Lamellenpaket der zweiten Teilkupplung ausgebildet sein, kann aber auch davon abweichen, beispielsweise größer ausgebildet sein.

Gemäß einem besonders bevorzugten Ausführungsbeispiel erstrecken sich mehrere, vorzugsweise in Umfangsrichtung gleichmäßig verteilt angeordnete Druckfinger durch eine entsprechende Anzahl von Aussparungen. Druckkräfte (und gegebenenfalls auch Zugkräfte) können somit in Umfangsrichtung der Doppelkupplung gleichmäßig verteilt werden. Beispielsweise sind 2, 3, 4, 5, 6, 7, 8 oder mehr als 8 Druckfinger vorgesehen. Nach oben wird die Anzahl der Druckfinger vorzugsweise durch die Anzahl der Zähne in der Zahnstruktur der Eingangslamellen begrenzt. Gemäß der Erfindung ist das erste Druckstück in Axialrichtung zwischen der ersten Teilkupplung und der zweiten Teilkupplung angeordnet. Vorzugsweise ist zusätzlich das zweite Druckstück in Axialrichtung zwischen der ersten Teilkupplung und der zweiten Teilkupplung angeordnet. Insbesondere ist es von Vorteil, wenn zumindest eine Lamellentrenneinrichtung, vorzugsweise eine Wellfeder, in Radialrichtung außerhalb der Aussparung, vorzugsweise außerhalb aller in Umfangsrichtung verteilt angeordneter Aussparungen, zwischen zwei benachbarten Eingangslamellen angeordnet ist. Hierdurch wird der Bauraumbedarf in Radialrichtung weiter verbessert und gleichzeitig die Funktionssicherheit der Doppelkupplung erhöht. Vorzugsweise ist die Doppelkupplung mit einer in Axialrichtung antriebseitig angeordneten, durch einen ersten Kolben einer ersten Kolben-Zylinder-Einheit betätigbaren ersten Teilkupplung, einer in Axialrichtung getriebeseitig angeordneten, durch einen zweiten Kolben einer zweiten Kolben-Zylinder-Einheit betätigbaren zweiten Teilkupplung und einem mit einem Antrieb verbindbaren Kupplungsgehäuse versehen, wobei der erste Kolben und der zweite Kolben jeweils zumindest einen sich in Radialrichtung erstreckenden Radialabschnitt aufweisen, wobei beide Radialabschnitte sich in Nachbarschaft zueinander befinden, und wobei zumindest einer der Radialabschnitte in einen konischen Abschnitt übergeht.

Insbesondere handelt es sich bei der Doppelkupplung um eine nasslaufende Doppelkupplung. Insbesondere ist die Doppelkupplung gemäß einem der vorangegangenen Ausführungsbeispiele ausgebildet.

Durch den konischen Abschnitt oder die konischen Abschnitte im ersten und/oder zweiten Kolben kann die Kupplungshysterese verringert werden, da ein steiferes Betätigungssystem, das weniger Verlustkolbenhub benötigt, zum Einsatz kommen kann.

Vorzugsweise ist der konische Abschnitt zwischen 30° und 60° zu einer in Axialrichtung der Doppelkupplung verlaufenden Drehachse geneigt, wenn man die Doppelkupplung in einer Schnittansicht betrachtet.

Die vorliegende Erfindung wird nachfolgend anhand bevorzugter Ausführungsbeispiele in Verbindung mit den zugehörigen Figuren näher erläutert. In diesen zeigen:
- Figur 1: einen schematischen Aufbau einer geschachtelten Doppelkupplung gemäß einem bevorzugten Ausführungsbeispiel,
- Figur 2: eine Schnittansicht eines Ausführungsbeispiels der Doppelkupplung, und
- Figur 3: eine Detailansicht eines Kolbens einer Kolben-Zylinder-Einheit für die erste, d.h. motorseitige bzw. antriebseitige Teilkupplung der Doppelkupplung.

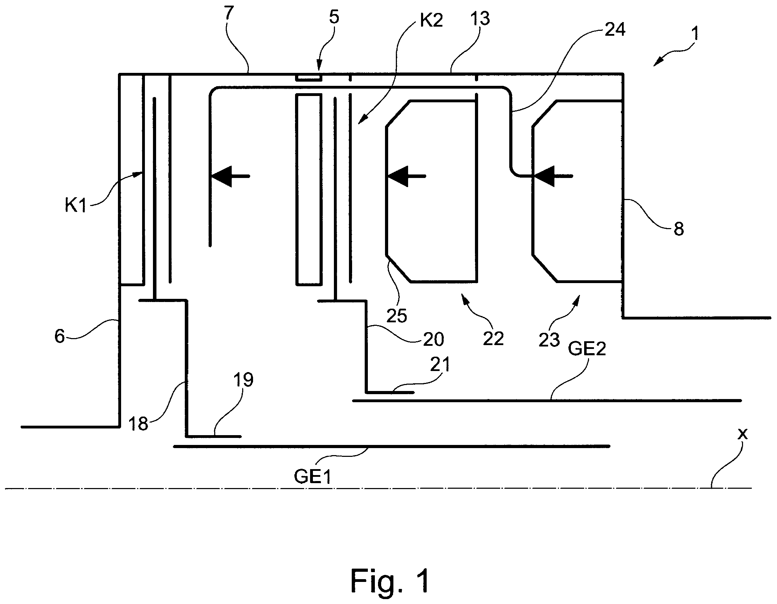

Die Figuren 1 bis 3 betreffen ein Ausführungsbeispiel einer Doppelkupplung für ein Kraftfahrzeug. Merkmale, die in der vorliegenden Beschreibung nicht als erfindungswesentlich gekennzeichnet sind, sind als optional zu verstehen. Daher betrifft die nachfolgende Beschreibung auch weitere Ausführungsbeispiele der Doppelkupplung, die Teilkombinationen der im Folgenden zu erläuternden Merkmale aufweisen.

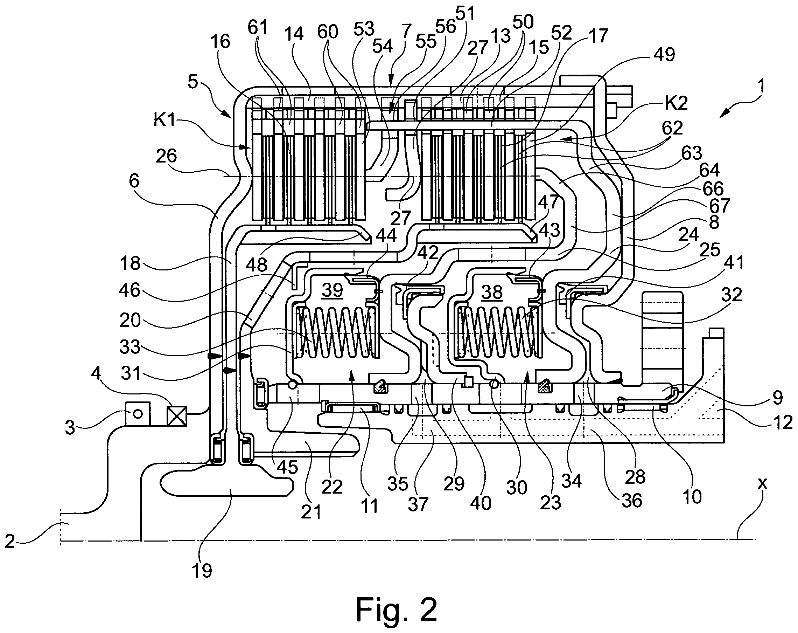

In den Figuren 1 und 2 ist ein grundlegendes Ausführungsbeispiel einer axialen Doppelkupplung 1 in Form einer Doppelnasskupplung in Figur 1 schematisch und in Figur 2 als konstruktives Ausführungsbeispiel gezeigt, bei der ein von einem Antriebsmotor kommendes Drehmoment, gegebenenfalls über einen Drehschwingungsdämpfer wie ein Zweimassenschwungrad (ZMS), an die Kupplungsnabe 2 weitergeleitet wird. Diese Kupplungsnabe 2 ist über die Lagerungseinrichtung 3 in einem nicht dargestellten Deckel abgestützt, welcher eine Kupplungsglocke abschließt, in der die Doppelkupplung 1 aufgenommen ist. Über die Dichteinrichtung 4 ist die nicht dargestellte Kupplungsglocke, in der die Doppelkupplung aufgenommen ist, gegenüber der Umgebung abgedichtet. Dabei wird die Kupplungsglocke im Regelfall durch eine nicht dargestellte Einbuchtung im Getriebegehäuse gebildet.

Die Kupplungsnabe 2 ist mit dem Kupplungsgehäuse 5 verbunden, welches den im Wesentlichen radial erstreckten Mitnahmebereich 6 und einen bezüglich der Drehachse x der Doppelkupplung 1 im Wesentlichen axial erstreckten zylindrischen Bereich 7 und den wiederum radial erstreckten Verbindungs- und Abstützbereich 8 enthält. Dieser Verbindungs- und Abstützbereich 8 ist in dem in Figur 2 gezeigten Ausführungsbeispiel drehfest und vorzugsweise auch axial fest mit dem Rotor 9 einer Elektromaschine verbunden. Der Rotor 9 ist über zwei Lagerungseinrichtungen 10, 11, welche vorzugsweise als Radialnadellager ausgebildet sind, auf dem Stator 12 gelagert. Dieser Stator 12 ist am Getriebegehäuse drehfest und vorzugsweise axial fest angebunden.

Der zylindrische Bereich 7 des Kupplungsgehäuses 5 enthält den Eingangslamellenträger 13 mit den Einhängebereichen 14, 15 für die Lamellenpakete 16, 17 der Teilkupplungen K1 und K2, wobei die Teilkupplung K1 motorseitig bzw. antriebsseitig und die Teilkupplung K2 getriebeseitig angeordnet ist. Die antriebsseitige Teilkupplung K1 enthält weiterhin den Ausgangslamellenträger 18, welcher über die Nabe 19 mit der inneren Getriebeeingangswelle GE1 drehverbunden ist. Die getriebeseitige Teilkupplung K2 enthält den Ausgangslamellenträger 20, welcher über die Nabe 21 mit der äußeren Getriebeeingangswelle GE2 drehverbunden ist. In dem in Figur 2 gezeigten Ausführungsbeispiel sind zwei Getriebeeingangswellen koaxial und geschachtelt zueinander angeordnet. Der Rotor 9 und der Stator 12 umgreifen hierbei die Getriebeeingangswellen.

Die Lamellenpakete 16, 17 werden mittels der radial innerhalb dieser angeordneten Kolben-/Zylindereinheiten 22, 23 betätigt. Hierzu beaufschlagen die Kolben 24, 25 jeweils eine Seite der Lamellenpakete 16, 17, während die andere Seite axial fest gegen die Druckstücke 26, 27 axial verspannt werden. Das Druckstück 26 ist dabei aus dem Mitnahmebereich gebildet, das Druckstück 27 in dem Eingangslamellenträger 13 axial fest aufgenommen wie eingehängt. Die Kolben 24, 25 werden durch Aufbau eines hydraulischen Drucks in den Druckkammern 28, 29 entgegen der Wirkung der sich an den am Rotor 9 axial fest aufgenommenen Blechteilen 30, 31 axial fest abstützenden Energiespeicher 32, 33 verlagert. Die Druckversorgung erfolgt über die im Rotor 9 vorgesehenen Öffnungen 34, 35 und die im Stator 12 vorgesehenen Druckkanäle 36, 37. Die Druckkammern 28, 29 werden von den axial verlagerbar auf dem Rotor 9 aufgenommenen Kolben 24, 25 und einerseits von dem Dichtungsträger 40 und andererseits von dem Abstützbereich 8 gebildet und mittels der Dichtungen 41, 42 nach außen abgedichtet. Die Energiespeicher 32, 33 sind in den von den Kolben 24, 25 und den Blechteilen 30, 31 gebildeten Fliehölkammern 38, 39, die nach außen mittels der Dichtungen 43, 44 abgedichtet sind, aufgenommen. Die Versorgung der Lamellenpakete 16, 17 mit Kühlöl erfolgt über die Öffnung 45 im Rotor 9 über einen Zwischenraum zwischen Stator 12 und der äußeren Getriebeeingangswelle und wird über Öffnungen in den Ausgangslamellenträgern 18, 20 verteilt. Das Ölleitblech 46 sorgt dabei für einen gleichmäßige Verteilung des Ölflusses auf beide Lamellenpakete 16, 17. Die Endseiten der Lamellenpakete 16, 17 verfügen weiterhin über radial nach innen gezogene Ölstaubleche, um den Ölstrom über die Lamellenpakete 16, 17 zu leiten. Diese Kühlölzuführung ist stromaufwärts über eine Kühlölnut im getriebeseitigen Glockenboden mit einer Druckniere im getriebeseitigen Glockenboden verbunden. Der Kühlölstrom wird zwischen der inneren Mantelfläche des Stators und der äußeren Getriebeeingangswelle zugeführt, hydraulisch getrennt von den übrigen Zuführungen.

In der schematischen Darstellung in Figur 1 sind Kolben-Zylinder-Einheiten 22, 23 für beide Teilkupplungen K1, K2 dargestellt. Die Doppelkupplung 1 wird über einen außen angeordneten Eingangslamellenträger 13, der mit dem Kupplungsgehäuse 5 verbunden oder einteilig mit dem Kupplungsgehäuse 5 ausgebildet ist, angetrieben. Der Abtrieb erfolgt jeweils über die innen angeordneten Ausgangslamellenträger 18, 20. Um die Teilkupplung K1 betätigen zu können, ist ein Um-, Durch- oder Übergriff über die Teilkupplung K2 vorzusehen.

Dies kann radial innerhalb des Lamellenpakets 17 der Teilkupplung K2 durch den Abtrieb der Teilkupplung K2 erfolgen. Da bei dieser Variante Bauteile durchgriffen werden müssen die mit Differenzdrehzahl rotieren werden dementsprechend Wälzlager benötigt.

Die Betätigung erfolgt daher bevorzugt radial außerhalb des Lamellenpakets 17. Dazu müssen keine mit Differenzdrehzahl rotierenden Bauteile durchgriffen werden, weshalb der Einsatz von Wälzlagern hinfällig ist.

Im in Figur 2 dargestellten Ausführungsbeispiel wird ein anderer Weg gewählt, nämlich ein Durchgriff durch das Lamellenpaket 17 der Teilkupplung K2. Im in Radialrichtung der Doppelkupplung außen angeordneten Eingangslamellenträger 13, der den Einhängebereich 15 in Form einer Innenverzahnung mit gleich großen, gleichmäßig über den Umfang verteilten Zähnen aufweist, sind Stahllamellen als Eingangslamellen 49 eingehängt. Zwischen den Stahllamellen, direkt radial innerhalb des Eingangslamellenträgers 13, befinden sich Federelemente, beispielsweise Wellfedern, als Lamellentrenneinrichtung, die bei geöffneter Teilkupplung K1 oder K2 die Eingangslamellen 49 aktiv voneinander trennen.

In einem Bereich radial innerhalb der Federelemente besitzen die Eingangslamellen 49 über den Umfang verteilte Aussparungen 50. Desweiteren verfügt das Druckstück 27 über eine entsprechende Aussparung 51. Die Eingangslamellen 49 sind so in die Innenverzahnung des Eingangslamellenträgers 13 eingehängt, dass die Aussparungen 50, 51 in axialer Richtung fluchtend angeordnet sind, so dass sie einen Kanal bilden. Die vorzugsweise im Wesentlichen ringförmige Lamellentrenneinrichtung ist in Radialrichtung außerhalb aller in Umfangsrichtung verteilt angeordneter Aussparungen 50 zwischen zwei benachbarten Eingangslamellen 49 angeordnet.

Der durch die Aussparungen 50, 51 ausgebildete Kanal ist in Radialrichtung in der Nähe eines Außenbereichs des Lamellenpaktes 17 ausgebildet. Einerseits können die Aussparungen 50 als Durchbrechung ausgebildet sein, deren Ränder durch Material der Eingangslamellen 49 vollständig umgeben sind. Andererseits können die Aussparungen 50 als offene Aussparungen ausgebildet sein, deren Ränder in einen Außenumfang der Eingangslamellen, insbesondere in die Zahnstruktur dieser übergehen. In diesem Fall bilden die Aussparungen 50 Zahnlücken, so dass die Zahnstruktur gegebenenfalls weniger Zähne zur Drehmomentübertragung aufweist als der Eingangslamellenträger 13.

Im dargestellten Ausführungsbeispiel sind die durch die Aussparungen ausgebildeten Kanäle, die vorzugsweise gleichmäßig in Umfangsrichtung der Doppelkupplung 1 verteilt angeordnet sind, ausschließlich durch die Eingangslamellen 49, d.h. durch die Stahllamellen ausgebildet.

Durch die Aussparungen 50 und die Aussparung 51 des Druckstücks 27 greifen in den Kolben 24 integrierte Druckfinger 52 in Axialrichtung hindurch. Vom Druckstück 27 der Teilkupplung K2 kommend sind die Druckfinger 52 mit dem auf die Endlamelle 53 der ersten Teilkupplung K1 unmittelbar oder mittelbar wirkenden ersten Druckstück 54 mittels der Verbindung 55, vorzugsweise einer Rastverbindung 56 wie Haken- oder Federklemmverbindung, verbunden. Die Verbindung 55 ist vorzugsweise zerstörungsfrei lösbar.

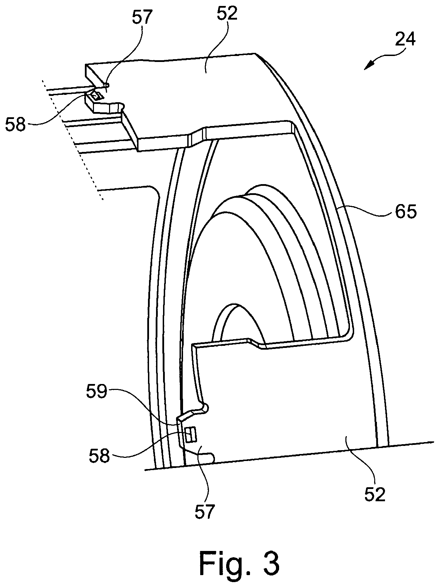

Figur 3 zeigt ein Ausführungsbeispiel eines dem Kolben 24 der Figur 2 entsprechenden Kolbens der Teilkupplung K1 in 3D-Ansicht. Zur Bildung der Verbindung 55 der Figur 2 enthält der Kolben 24 an dessen Druckfingern 52 die Fangelemente 57, die in entsprechende Öffnungen des Druckstücks 54 eingreifen. Die in die jeweiligen Fangelemente 57 eingeprägten Sicherungselemente 58 verhindern das Lösen der Verbindung 55 von Druckstück 54 und Druckfinger 52 beim Öffnen der Teilkupplung K1, bei dem der Kolben 24 in Zugrichtung des Druckstücks 54 verlagert wird. Infolge der die Öffnungen des Druckstücks 54 durchgreifenden Fangelemente 57 treten an der Verbindung 55 (Figur 2) die Überstände 59 auf. Durch Ausbildung von mit den Aussparungen 50, 51 fluchtenden Aussparungen 60 (Figur 2) zumindest in der Endlamelle 53 können bei einer Betätigung der Teilkupplung K1 die Überstände 59 in die Aussparung 60 axial eintauchen. Bei der Ausbildung identischer Aussparungen 60 in allen Eingangslamellen 61 des Lamellenpakets 16 können alle Eingangslamellen 49, 61 der Doppelkupplung 1 als Gleichteile ausgebildet werden.

Radial innerhalb der Druckfinger 52 befinden sich die mit Abtriebsdrehzahl rotierenden Ausgangslamellen 62, die bevorzugt als Belaglamellen ausgebildet und in den Ausgangslamellenträger 20 der Teilkupplung K2 drehschlüssig eingehängt sind.

Der Durchgriff der Druckfinger 52 unterhalb der Federelemente bewirkt, dass die radiale Abmessung des Kolbens 24 klein gehalten werden kann, was der Steifigkeit der Kolben-Zylinder-Einheit 22 der Teilkupplung K1 zu Gute kommt, weil der Kolben 24 beim Betätigen weniger stark elastisch verformt wird. Dadurch muss in der Kolben-Zylinder-Einheit 22 weniger Kolbenhub vorgehalten werden und es wird weniger Ölvolumen zum Betätigen der Teilkupplung K1 benötigt, wodurch sich auch kürzere Betätigungszeiten realisieren lassen.

Alternativ und insbesondere zusätzlich kann die Kolben-Zylinder-Einheit 22 der Teilkupplung K1 und/oder die Kolben-Zylinder-Einheit 23 der zweiten Teilkupplung K2 auch dadurch versteift werden, dass die Kolben 24, 25 jeweils zumindest einen sich in Radialrichtung erstreckenden Radialabschnitt aufweisen, wobei beide Radialabschnitte sich in Nachbarschaft zueinander befinden, und wobei zumindest einer der Radialabschnitte in einen konischen Abschnitt 63, 64 übergeht. Durch den konischen Abschnitt 63, 64 oder die konischen Abschnitte im ersten und/oder zweiten Kolben 24, 25 kann eine Kupplungshysterese verringert werden, da steifere Kolben-Zylindereinheiten 22, 23 mit weniger Verlustkolbenhub vorgesehen werden können.

Vorzugsweise ist der konische Abschnitt zwischen 30° und 60° zu der in Axialrichtung der Doppelkupplung 1 verlaufenden Drehachse x geneigt.

Alternativ und insbesondere zusätzlich kann die Kolben-Zylinder-Einheit 22 der Teilkupplung K1 auch dadurch versteift werden, dass der Kolben 24 ausschließlich in Axialrichtung verlaufende Druckfinger 52 zur Betätigung der ersten Teilkupplung K1 aufweist. Da die Druckfinger 52 zur Betätigung der ersten Teilkupplung K1 in Radialrichtung keinen Vorsprung oder Hinterschnitt aufweisen, kann zum Einen der in Radialrichtung der Doppelkupplung 1 benötigte Bauraum verringert werden und zum Anderen die Kupplungshysterese verringert werden, da eine steifere Kolben-Zylinder-Einheit 22, die weniger Verlustkolbenhub benötigt, zum Einsatz kommen kann.

Vorzugsweise weist der Kolben 24 in Umfangsrichtung gleichmäßig verteilt angeordnete Druckfinger 52 auf. Insbesondere ist es von Vorteil, wenn der oder die Druckfinger 52 einteilig mit dem Kolben 24 ausgebildet sind. Von besonderem Vorteil ist eine Übertragung von Druckkräften (und gegebenenfalls auch von Zugkräften), wenn der Kolben 24 in seinem Außenumfang einen in Umfangsrichtung vollständig umlaufenden Kragen 65 (Figur 3) aufweist, aus dem die Druckfinger 52 in Axialrichtung vorspringen.

Die vorgenannten Ausführungsbeispiele betreffen eine Doppelkupplung 1 mit axial hintereinander angeordneten Teilkupplungen K1, K2 für ein Doppelkupplungsgetriebe in einem Antriebstrang eines Fahrzeuges mit einer in Axialrichtung antriebseitig angeordneten, durch die erste Kolben-Zylinder-Einheit 22 betätigbaren ersten Teilkupplung K1, der in Axialrichtung getriebeseitig angeordneten, durch die zweite Kolben-Zylinder-Einheit 23 betätigbaren zweiten Teilkupplung K2 und dem mit einem Antrieb verbindbaren Kupplungsgehäuse 5, wobei das Kupplungsgehäuse 5 über den bezüglich des Lamellenpakets 16 der ersten Teilkupplung K1 innenliegend angeordneten Ausgangslamellenträger 18 der ersten Teilkupplung K1 mit der ersten Getriebeeingangswelle GE1 und über den bezüglich des Lamellenpakets 17 der zweiten Teilkupplung K2 innenliegend angeordneten Ausgangslamellenträger 20 der zweiten Teilkupplung mit der zweiten Getriebeeingangswelle GE2 verbindbar ist, und wobei das Lamellenpaket 17 der zweiten Teilkupplung K2 zumindest eine Aussparung 50, 51 aufweist, durch die sich ein mit der ersten Kolben-Zylinder-Einheit 22 in Wirkbeziehung stehender, in Axialrichtung verlagerbarer Druckfinger 52 zur Betätigung der ersten Teilkupplung K1 erstreckt. Insbesondere handelt es sich bei der Doppelkupplung 1 um eine nasslaufende Doppelkupplung.

Ferner betrifft das in den Figuren 1 bis 3 dargestellte Ausführungsbeispiel die Doppelkupplung 1 mit axial hintereinander angeordneten Teilkupplungen K1, K2 für ein Doppelkupplungsgetriebe in einem Antriebstrang eines Fahrzeuges, mit der in Axialrichtung antriebseitig angeordneten, durch einen ersten Kolben 24 der ersten Kolben-Zylinder-Einheit 22 betätigbaren ersten Teilkupplung K1, der in Axialrichtung getriebeseitig angeordneten, durch den zweiten Kolben 25 der zweiten Kolben-Zylinder-Einheit 23 betätigbaren zweiten Teilkupplung K2 und dem mit einem Antrieb verbindbaren Kupplungsgehäuse 5, wobei das Kupplungsgehäuse 5 über den bezüglich des Lamellenpakets 16 der ersten Teilkupplung K1 innenliegend angeordneten Ausgangslamellenträger 18 der ersten Teilkupplung K1 mit der ersten Getriebeeingangswelle GE1 und über einen bezüglich des Lamellenpakets 17 der zweiten Teilkupplung K2 innenliegend angeordneten Ausgangslamellenträger 20 der zweiten Teilkupplung K2 mit der zweiten Getriebeeingangswelle GE2 verbindbar ist, wobei der erste Kolben 24 und der zweite Kolben 25 jeweils zumindest einen sich in Radialrichtung erstreckenden Radialabschnitt 66, 67 aufweisen, wobei beide Radialabschnitte 66, 67 sich in Nachbarschaft zueinander befinden, und wobei zumindest einer der Radialabschnitte 66, 67 in einen konischen Abschnitt 63, 64 übergeht.

Darüber hinaus zeigt das in den Figuren 1 bis 3 gezeigte Ausführungsbeispiel die Doppelkupplung 1 mit axial hintereinander angeordneten Teilkupplungen K1, K2 für ein Doppelkupplungsgetriebe in einem Antriebstrang eines Fahrzeuges, mit der in Axialrichtung antriebseitig angeordneten, durch den ersten Kolben 24 der ersten Kolben-Zylinder-Einheit 22 betätigbaren ersten Teilkupplung K1, der in Axialrichtung getriebeseitig angeordneten, durch den zweiten Kolben 25 der zweiten Kolben-Zylinder-Einheit 23 betätigbaren zweiten Teilkupplung K2 und dem mit einem Antrieb verbindbaren Kupplungsgehäuse 5, wobei das Kupplungsgehäuse 5 über einen bezüglich des Lamellenpakets 16 der ersten Teilkupplung K1 innenliegend angeordneten Ausgangslamellenträger 18 der ersten Teilkupplung K1 mit der ersten Getriebeeingangswelle GE1 und über den bezüglich des Lamellenpakets 17 der zweiten Teilkupplung K2 innenliegend angeordneten Ausgangslamellenträger 20 der zweiten Teilkupplung K2 mit der zweiten Getriebeeingangswelle K2 verbindbar ist, und wobei der erste Kolben 24 zumindest einen, insbesondere ausschließlich in Axialrichtung verlaufenden, Druckfinger 52 zur Betätigung der ersten Teilkupplung K2 aufweist.

### Bezugszeichenliste

- 1: Doppelkupplung
- 2: Kupplungsnabe
- 3: Lagerungseinrichtung
- 4: Dichteinrichtung
- 5: Kupplungsgehäuse
- 6: Mitnahmebereich
- 7: zylindrischer Bereich
- 8: Abstützbereich
- 9: Rotor
- 10: Lagerungseinrichtung
- 11: Lagerungseinrichtung
- 12: Stator
- 13: Eingangslamellenträger
- 14: Einhängebereich
- 15: Einhängebereich
- 16: Lamellenpaket
- 17: Lamellenpaket
- 18: Ausgangslamellenträger
- 19: Nabe
- 20: Ausgangslamellenträger
- 21: Nabe
- 22: Kolben-Zylinder-Einheit
- 23: Kolben-Zylinder-Einheit
- 24: Kolben
- 25: Kolben
- 26: Druckstück
- 27: Druckstück
- 28: Druckkammer
- 29: Druckkammer
- 30: Blechteil
- 31: Blechteil
- 32: Energiespeicher
- 33: Energiespeicher
- 34: Öffnung
- 35: Öffnung
- 36: Druckkanal
- 37: Druckkanal
- 38: Fliehölkammer
- 39: Fliehölkammer
- 40: Dichtungsträger
- 41: Dichtung
- 42: Dichtung
- 43: Dichtung
- 44: Dichtung
- 45: Öffnung
- 46: Ölleitblech
- 47: Ölstaublech
- 48: Ölstaublech
- 49: Eingangslamelle
- 50: Aussparung
- 51: Aussparung
- 52: Druckfinger
- 53: Endlamelle
- 54: Druckstück
- 55: Verbindung
- 56: Rastverbindung
- 57: Fangelement
- 58: Sicherungselement
- 59: Überstand
- 60: Aussparung
- 61: Eingangslamelle
- 62: Ausgangslamelle
- 63: konischer Abschnitt
- 64: konischer Abschnitt
- 65: Kragen
- 66: Radialabschnitt
- 67: Radialabschnitt
- GE1: Getriebeeingangswelle
- GE2: Getriebeeingangswelle
- K1: Teilkupplung
- K2: Teilkupplung
- x: Drehachse

## Patentansprüche

1. Doppelkupplung (1), insbesondere nasslaufende Doppelkupplung, mit axial hintereinander angeordneten Teilkupplungen (K1, K2) für ein Doppelkupplungsgetriebe in einem Antriebstrang eines Fahrzeuges, mit
einer in Axialrichtung antriebseitig angeordneten, durch eine erste Kolben-Zylinder-Einheit (22) betätigbaren ersten Teilkupplung (K1), einer in Axialrichtung getriebeseitig angeordneten, durch eine zweite Kolben-Zylinder-Einheit (23) betätigbaren zweiten Teilkupplung (K2) und einem mit einem Antrieb verbindbaren Kupplungsgehäuse (5), wobei das Kupplungsgehäuse (5) über einen bezüglich eines Lamellenpakets (16) der ersten Teilkupplung (K1) innenliegend angeordneten Ausgangslamellenträger (18) der ersten Teilkupplung (K1) mit einer ersten Getriebeeingangswelle (GE1) und über einen bezüglich eines Lamellenpakets (17) der zweiten Teilkupplung (K2) innenliegend angeordneten Ausgangslamellenträger (20) der zweiten Teilkupplung (K2) mit einer zweiten Getriebeeingangswelle (GE2) verbindbar ist, wobei das Lamellenpaket (17) der zweiten Teilkupplung (K2) zumindest eine Aussparung (50, 51) aufweist, durch die sich ein mit der ersten Kolben-Zylinder-Einheit (22) in Wirkbeziehung stehender, in Axialrichtung verlagerbarer Druckfinger (52) zur Betätigung der ersten Teilkupplung (K1) erstreckt, wobei der Druckfinger mit einem auf eine Endlamelle der erste Teilkupplung unmittelbar oder mittelbar wirkenden und in Axialrichtung zwischen der ersten Teilkupplung und der zweiten Teilkupplung angeordneten ersten Druckstück (54), vorzugsweise mittels einer Haken- oder Federklemmverbindung, verbunden ist, **dadurch gekennzeichnet, dass** der Druckfinger (52) bezüglich des Druckstücks (54) in Axialrichtung einen Überstand (59) aufweist und wobei das Lamellenpaket (16) der ersten Teilkupplung (K1) eine Aussparung (60) aufweist, in die der Überstand (59) bei Verlagerung des Druckfingers (52) in Axialrichtung einfährt.

2. Doppelkupplung (1) nach Anspruch 1, wobei die Aussparung (50, 51) als Durchbrechung ausgebildet ist, deren Rand durch Material des Lamellenpakets (17) vollständig umgeben ist.

3. Doppelkupplung (1) nach Anspruch 1, wobei die Aussparung (50, 51) als offene Aussparung ausgebildet ist, deren Rand in einen Außenumfang des Lamellenpakets (17) übergeht.

4. Doppelkupplung (1) nach zumindest einem der Ansprüche 1 bis 3, wobei das Lamellenpaket (17) Eingangslamellen (49) und Ausgangslamellen (62) aufweist, die in Axialrichtung abwechselnd angeordnet sind, und von denen die Eingangslamellen (49) in Radialrichtung weiter außen als die Ausgangslamellen (62) angeordnet sind, und wobei Aussparungen (50) in den Eingangslamellen (49) einen Kanal in Axialrichtung bilden, durch den sich der Druckfinger (52) erstreckt.

5. Doppelkupplung (1) nach Anspruch 4, wobei der Kanal ausschließlich durch die Eingangslamellen (50) und eine Aussparung (51) eines Druckstücks (54) des Lamellenpakets (17) ausgebildet ist.

6. Doppelkupplung (1) nach Anspruch 4 oder 5, wobei die Eingangslamellen (49) in ihrem Außenumfang eine vorzugsweise gleichmäßige Zahnstruktur aufweisen, die in eine entsprechende Zahnstruktur eines Eingangslamellenträgers (13), der mit dem Kupplungsgehäuse (5) verbunden oder einteilig mit dem Kupplungsgehäuse (5) ausgebildet ist, eingreift.

7. Doppelkupplung (1) nach Anspruch 3 und 6, wobei die offene Aussparung in die Zahnstruktur übergeht.

8. Doppelkupplung (1) nach zumindest einem der Ansprüche 1 bis 7, wobei die Aussparung (60) im Lamellenpaket (16) der ersten Teilkupplung (K1) identisch zur Aussparung (50) im Lamellenpaket (17) der zweiten Teilkupplung (K2) ausgebildet ist.

9. Doppelkupplung (1), insbesondere nasslaufende Doppelkupplung, nach zumindest einem der Ansprüche 1 bis 8, mit einer in Axialrichtung antriebseitig angeordneten, durch einen ersten Kolben (24) einer ersten Kolben-Zylinder-Einheit (22) betätigbaren ersten Teilkupplung (K1), einer in Axialrichtung getriebeseitig angeordneten, durch einen zweiten Kolben (25) einer zweiten Kolben-Zylinder-Einheit (23) betätigbaren zweiten Teilkupplung (K2) und einem mit einem Antrieb verbindbaren Kupplungsgehäuse (5), wobei der erste Kolben (24) und der zweite Kolben (25) jeweils zumindest einen sich in Radialrichtung erstreckenden Radialabschnitt (66, 67) aufweisen, und wobei beide Radialabschnitte (66, 67) sich in Nachbarschaft zueinander befinden, und wobei beide Radialabschnitte (66, 67) in einen konischen, zwischen 30° und 60° zu einer in Axialrichtung der Doppelkupplung verlaufenden Drehachse (x) geneigten Abschnitt (63, 64) übergeht.

## Claims

1. Double clutch (1), in particular wet-running double clutch, having component clutches (K1, K2) which are arranged axially behind one another for a double clutch transmission in a drive train of a vehicle, having a first component clutch (K1) which is arranged on the drive side in the axial direction and can be actuated by way of a first piston/cylinder unit (22), a second component clutch (K2) which is arranged on the transmission side in the axial direction and can be actuated by way of a second piston/cylinder unit (23), and a clutch housing (5) which can be connected to a drive, it being possible for the clutch housing (5) to be connected to a first transmission input shaft (GE1) via an output multiple disc carrier (18) of the first component clutch (K1), which output multiple disc carrier (18) is arranged so as to lie on the inside with regard to a multiple disc assembly (16) of the first component clutch (K1), and to a second transmission input shaft (GE2) via an output multiple disc carrier (20) of the second component clutch (K2), which output multiple disc carrier (20) is arranged so as to lie on the inside with regard to a multiple disc assembly (17) of the second component clutch (K2), the multiple disc assembly (17) of the second component clutch (K2) having at least one cut-out (50, 51), through which a pressure finger (52) extends which is operatively connected to the first piston/cylinder unit (22) and can be moved in the axial direction for actuating the first component clutch (K1), the pressure finger being connected, preferably by means of a hook connection or spring clamp connection, to a first pressure piece (54) which acts directly or indirectly on an end disc of the first component clutch and is arranged in the axial direction between the first component clutch and the second component clutch, **characterized in that** the pressure finger (52) has a projection (59) in the axial direction with regard to the pressure piece (54), and the multiple disc assembly (16) of the first component clutch (K1) having a cut-out (60), into which the projection (59) moves in the case of a movement of the pressure finger (52) in the axial direction.

2. Double clutch (1) according to Claim 1, the cut-out (50, 51) being configured as an aperture, the edge of which is surrounded completely by way of material of the multiple disc assembly (17).

3. Double clutch (1) according to Claim 1, the cut-out (50, 51) being configured as an open cut-out, the edge of which merges into an outer circumference of the multiple disc assembly (17).

4. Double clutch (1) according to at least one of Claims 1 to 3, the multiple disc assembly (17) having input discs (49) and output discs (62) which are arranged in an alternating manner in the axial direction, and of which the input discs (49) are arranged further to the outside in the radial direction than the output discs (62), and cut-outs (50) in the input discs (49) forming a channel in the axial direction, through which channel the pressure finger (52) extends.

5. Double clutch (1) according to Claim 4, the channel being configured exclusively by way of the input discs (50) and a cut-out (51) of a pressure piece (54) of the multiple disc assembly (17).

6. Double clutch (1) according to Claim 4 or 5, the input discs (49) having, in their outer circumference, a preferably uniform tooth structure which engages into a corresponding tooth structure of an input multiple disc carrier (13) which is connected to the clutch housing (5) or is configured in one piece with the clutch housing (5).

7. Double clutch (1) according to Claims 3 and 6, the open cut-out merging into the tooth structure.

8. Double clutch (1) according to at least one of Claims 1 to 7, the cut-out (60) in the multiple disc assembly (16) of the first component clutch (K1) being identical to the cut-out (50) in the multiple disc assembly (17) of the second component clutch (K2).

9. Double clutch (1), in particular wet-running double clutch, according to at least one of Claims 1 to 8, having a first component clutch (K1) which is arranged on the drive side in the axial direction and can be actuated by way of a first piston (24) of a first piston/cylinder unit (22), a second component clutch (K2) which is arranged on the transmission side in the axial direction and can be actuated by way of a second piston (25) of a second piston/cylinder unit (23), and a clutch housing (5) which can be connected to a drive, the first piston (24) and the second piston (25) in each case having at least one radial section (66, 67) which extends in the radial direction, and the two radial sections (66, 67) being situated in the vicinity of one another, and the two radial sections (66, 67) merging into a conical section (63, 64) which is inclined at between 30° and 60° with respect to a rotational axis (x) which runs in the axial direction of the double clutch.

## Revendications

1. Double embrayage (1), en particulier double embrayage humide, comprenant des embrayages partiels (K1, K2) disposés axialement les uns derrière les autres pour une transmission à double embrayage dans une chaîne cinématique d'un véhicule, comprenant
un premier embrayage partiel (K1) disposé du côté de l'entraînement dans la direction axiale, pouvant être actionné par une première unité cylindre-piston (22), un deuxième embrayage partiel (K2) disposé du côté de la transmission dans la direction axiale, pouvant être actionné par une deuxième unité cylindre-piston (23) et un boîtier d'embrayage (5) pouvant être connecté à un entraînement, le boîtier d'embrayage (5) pouvant être connecté à un premier arbre d'entrée de boîte de vitesses (GE1) par le biais d'un support de disques de sortie (18) du premier embrayage partiel (K1) par rapport à un paquet de disques (16) du premier embrayage partiel (K1) disposé du côté intérieur et à un deuxième arbre d'entrée de boîte de vitesses (GE2) par le biais d'un support de disques de sortie (20) du deuxième embrayage partiel (K2) disposé du côté intérieur par rapport à un paquet de disques (17) du deuxième embrayage partiel (K2),
le paquet de disques (17) du deuxième embrayage partiel (K2) présentant au moins un évidement (50, 51) à travers lequel s'étend un doigt de pression (52) déplaçable dans la direction axiale, en liaison fonctionnelle avec la première unité cylindre-piston (22), pour l'actionnement du premier embrayage partiel (K1), le doigt de pression étant connecté, de préférence au moyen d'une connexion par serrage à crochet ou à ressort, à un premier organe de pression (54) agissant directement ou indirectement sur un disque d'extrémité du premier embrayage partiel et disposé dans la direction axiale entre le premier embrayage partiel et le deuxième embrayage partiel,
**caractérisé en ce que**
le doigt de pression (52) présente un dépassement (59) dans la direction axiale par rapport à l'organe de pression (54) et le paquet de disques (16) du premier embrayage partiel (K1) présente un évidement (60) dans lequel le dépassement (59) s'enfonce dans la direction axiale lors du déplacement du doigt de pression (52).

2. Double embrayage (1) selon la revendication 1, dans lequel l'évidement (50, 51) est réalisé sous forme d'orifice dont le bord est complètement entouré par le matériau du paquet de disques (17).

3. Double embrayage (1) selon la revendication 1, dans lequel l'évidement (50, 51) est réalisé sous forme d'évidement ouvert dont le bord se prolonge par une périphérie extérieure du paquet de disques (17).

4. Double embrayage (1) selon au moins l'une quelconque des revendications 1 à 3, dans lequel le paquet de disques (17) présente des disques d'entrée (49) et des disques de sortie (62) qui sont disposés en alternance dans la direction axiale, et dont les disques d'entrée (49) sont disposés dans la direction radiale davantage vers l'extérieur par rapport aux disques de sortie (62), et des évidements (50) dans les disques d'entrée (49) formant un canal dans la direction axiale à travers lequel s'étend le doigt de pression (52).

5. Double embrayage (1) selon la revendication 4, dans lequel le canal est réalisé exclusivement par les disques d'entrée (50) et par un évidement (51) d'un organe de pression (54) du paquet de disques (17) .

6. Double embrayage (1) selon la revendication 4 ou 5, dans lequel les disques d'entrée (49) présentent, dans leur périphérie extérieure, une structure dentée de préférence régulière, qui s'engage dans une structure dentée correspondante d'un support de disques d'entrée (13) qui est connecté au boîtier d'embrayage (5) ou qui est réalisé d'une seule pièce avec le boîtier d'embrayage (5).

7. Double embrayage (1) selon les revendications 3 et 6, dans lequel l'évidement ouvert se prolonge dans la structure dentée.

8. Double embrayage (1) selon au moins l'une quelconque des revendications 1 à 7, dans lequel l'évidement (60) dans le paquet de disques (16) du premier embrayage partiel (K1) est identique à l'évidement (50) dans le paquet de disques (17) du deuxième embrayage partiel (K2).

9. Double embrayage (1), en particulier double embrayage humide, selon l'une quelconque des revendications 1 à 8, comprenant un premier embrayage partiel (K1) disposé du côté de l'entraînement dans la direction axiale, pouvant être actionné par un premier piston (24) d'une première unité cylindre-piston (22), un deuxième embrayage partiel (K2) disposé du côté de la transmission dans la direction axiale, pouvant être actionné par un deuxième piston (25) d'une deuxième unité cylindre-piston (23) et un boîtier d'embrayage (5) pouvant être connecté à un entraînement,
le premier piston (24) et le deuxième piston (25) présentant à chaque fois au moins une portion radiale (66, 67) s'étendant dans la direction radiale et
les deux portions radiales (66, 67) se trouvant à proximité l'une de l'autre et les deux portions radiales (66, 67) se prolongeant par une portion conique (63, 64) inclinée entre 30° et 60° par rapport à un axe de rotation (x) s'étendant la direction axiale du double embrayage.
